(19) Europäisches Patentamt
European Patent Office
Office européen des brevets

(11) **EP 3 768 599 B1**

(12) **EUROPEAN PATENT SPECIFICATION**

(45) Date of publication and mention
of the grant of the patent:
**28.02.2024 Bulletin 2024/09**

(21) Application number: **19771190.6**

(22) Date of filing: **19.03.2019**

(51) International Patent Classification (IPC):
**B64D 25/20** *(2006.01)*    **B64D 45/00** *(2006.01)*

(52) Cooperative Patent Classification (CPC):
**B64D 25/20;** B64D 2045/0065

(86) International application number:
**PCT/AU2019/050239**

(87) International publication number:
**WO 2019/178637 (26.09.2019 Gazette 2019/39)**

(54) **DEPLOYABLE FLIGHT DATA RECORDER WITH DATA RECOVERY AND METHOD**

ENTFALTBARER FLUGDATENAUFZEICHNER MIT DATENRÜCKGEWINNUNG UND VERFAHREN

ENREGISTREUR DE DONNÉES DE VOL DÉPLOYABLE À RÉCUPÉRATION DE DONNÉES ET PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2018 AU 2018900924**

(43) Date of publication of application:
**27.01.2021 Bulletin 2021/04**

(73) Proprietor: **Massa, Massimo**
**Berwick VIC 3806 (AU)**

(72) Inventor: **Massa, Massimo**
**Berwick VIC 3806 (AU)**

(74) Representative: **AWA Sweden AB**
**Box 45086**
**104 30 Stockholm (SE)**

(56) References cited:
**WO-A1-2016/141231    WO-A2-2016/203322**
**WO-A2-2016/203322    KR-B1- 101 007 214**
**US-A1- 2017 251 096    US-B1- 9 738 398**
**US-B1- 9 738 398**

**Description**

**Technical Field**

The present invention generally relates to recovering data from a device in a host flying vehicle.

**Background of Invention**

After an accident or incident involving a flying vehicle, data recovered from recording instruments is often critical for root cause analysis and, in a broader way, to transport safety. Where the vehicle is an aircraft, data extracted from flight data recorders after a crash by way of non-limiting example, has helped accident investigators determine root causes and to develop appropriate preventative measures.

Recovering data from recording instruments can be problematic as they may be damaged in the impact or fire associated with a crash. Even if recording instruments are not damaged, they must be found after the crash in order to recover recorded data. This can be difficult where debris from the crash sinks in a body of water, for example. If the devices are found, it can take a long time to retrieve information about the crash, which is a problem for transport safety organisations, vehicle operators, vehicle manufactures and still more the families of the victims of the accident.

Known recoding instruments are often fitted with an underwater locator beacon (ULB), underwater acoustic beacon or the like, which are generally automatically triggered upon the crash of an aircraft and emit, every second or thereabouts, an omnidirectional ultrasound signal, so as to aid the localisation of the debris. This signal can be detected as down to a depth of about 6000 meters, via the use of specific passive hydrophones, being towed behind rescue ships deployed on the area of the accident. Moreover, some vehicles, including most general aviation aircraft are required to carry emergency locator transmitters (ELT). ELTs are distress beacons which are activated following an accident either automatically by embedded electronics, or manually by a pilot or other person. An active beacon is detected by orbiting satellites which transmit a signal to search and rescue coordinators. The ELT also emits a transmission on a frequency which can be detected, and homed in on, by overflying aircraft. ELTs do not operate when submerged underwater owing to the natural laws that govern radio waves. They are also susceptible to damage by impact.

Another disadvantage with ULBs and ELTs is they are battery operated and stop "pinging" or transmitting when the battery is exhausted.

It would be desirable to provide a recoverable data recording device which ameliorates or at least alleviates one or more of the above problems or to provide an alternative.

It would also be desirable to provide an ejectable data recording device that ameliorates or overcomes one or more disadvantages or inconvenience of known ejectable data recording devices.

[DELETED]

US 9 738 398 B1 discusses an ejectable flight data recorder for retention of flight data and aiding in locating an aircraft after an emergency situation.

WO 2016/203322 A2 discusses a search/rescue drone arrangement and structure.

US 2017/251096 A1 discusses a method for recording and conveying information/data by a device associated with a catastrophic or emergency event. The device transmits and conveys data to facilitate locating the device after a catastrophic event. In some embodiments, and is configured to be ejected from a vehicle before or during a catastrophic event.

WO 2016/141231 A1 discusses a system for quickly locating and retrieving flight data of an aircraft after an aircraft mid-air mishap.

KR 101 007 214 B1 discusses an ejection sensor system for an aircraft which automatically senses when the seat is ejected.

**Summary of Invention**

According to the invention from a first aspect defined in claim 1 there is provided a device for offloading data recorded in a host vehicle, comprising: an interface module configured to interface the device to one or more data recording devices in the host vehicle; a memory module configured to independently store data from the data recording devices; and a wireless transmitter configured to transmit the stored data when one or more predefined criterion in the stored data and/or recording devices are met.

In one or more embodiments, the device may further comprise an ejection module configured to separate one or more ejectable parts of the device from the host vehicle when the predefined criterion in the stored data are met. Advantageously, providing an ejectable part may separate any data stored from the calamity, impact or fire associated with a crash.

In one or more embodiments, the device may further comprise an inflatable floatation device configured to be activated in water. Advantageously, providing an inflatable floatation device may aid in finding the device, particularly where debris from a crash sinks in a body of water, for example. The inflatable floatation device may use a compressed gas container (e.g., compressed carbon dioxide) configured to open into an inflatable article such as a balloon or airbag.

In one or more embodiments, the device may further comprise a self-righting means configured to return the device to a neutral configuration in water. Advantageously, the self-righting means may allow for the device to assume an operative orientation so that it remains substantially upwardly directed with respect to the surface of the water. The self-righting means may employ a ballast arrangement such as urethane foam over a stainless steel weighted ballast.

In one or more embodiments, the device may further comprise a deployable means to slow descent of the device to a landing site. The deployable means may include one or more of parachutes and parafoils. The parachutes or parafoils may be made out of light, strong fabric, such as silk or nylon. The parachutes or parafoils may be dome-shaped, rectangle, or inverted dome shaped. The parachute or parafoil of may be located within the interior of the ejectable part and attached to a cord that tethers the ejectable part to the parachute or parafoil.

In one or more embodiments, the deployable means may include a wing assembly and propulsion system including one or more rotors disposed on the wing assembly to generate lift. The deployable means may include a wing assembly referred to as a helicopter, tricopter, a quadcopter, etc.

In one or more embodiments, the device may further comprise an underwater locating beacon (ULB). Advantageously, the ULB may also provide a redundant locating means if any of the above systems fail and the device sinks with debris from a crash sinks in a body of water.

In one or more embodiments, the device may further comprise a location module configured to determine a location of the device. The location module may determine the location from one of more of global positioning systems and inertial navigation systems.

According to the invention, the predefined criterion relates to an acceleration parameter of the host vehicle. The acceleration parameter is parsed from a conventional flight data stream (which is an ARINC 717 stream). Advantageously, this makes use of a mandatory sensed parameter of flight data recorders for most general aviation aircraft and does not require the device to have additional sensors.

In one or more embodiments, the predefined criterion occurs prior to an occurrence of a catastrophic failure event involving the host vehicle. A catastrophic failure event may include a vertical acceleration (G) equal to or more than the structural limitations of the host vehicle.

In one or more embodiments, the wireless transmitter transmits according to one or more of an 802.11, Global System for Mobile Communications (GSM), General Packet Radio Service (GPRS), Enhanced Data for GSM Evolution (EDGE), Universal Mobile Telecommunications System (UMTS), Wideband Code-Division Multiple Access (W-CDMA), Long Term Evolution (LTE), Code Division Multiple Access (CDMA), Time Division Multiple Access (TDMA), Frequency Division Multiple Access (FDMA), Evolution Data Optimized (EVDO), Code Division Multiple Access (CDMA2000), Ultra Mobile Broadband (UMB) and Worldwide Interoperability for Microwave Access (WIMAX) protocols. Other protocols may also be supported including Near Field Communication (NFC) (e.g., ECMA-340 and ISO/IEC 18092), Zigbee (e.g., 802.15) and Bluetooth™. The protocol may be selected based on at least one of a geographic location, a received signal strength, a signal to interference ratio, a received signal code power and a bit error rate. The protocol selection may be dynamic for determination of the best route to send data in order to improve the QoS and reliability. Furthermore, the protocol may be selected based on the available bandwidth, cost or power considerations.

In one or more embodiments, the device may comprise a wireless receiver configured to receive wireless data, including wireless interrogation data, wherein the wireless transmitter is further configured to transmit the stored data upon receipt of the wireless interrogation data. Advantageously, monitoring for the presence of interrogation signals from an interrogator (i.e., a field device) has a number of security advantages. For example, periodically monitoring of interrogation affirms the presence and condition of the ejectable part, thereby providing a high degree of physical security.

In one or more embodiments, the device may further comprise an independent power supply configured to provide power to the device for an extended period. The independent power supply may include one or more of batteries and solar cells. The independent power supply includes solar cells that charge the batteries. Advantageously, solar cells may be provided to charge the rechargeable batteries via a charge controller. A charge controller may manage the flow of current from the solar panel to optimise the state of charge of the battery and to maximize the useful life of the battery.

In one or more embodiments, the interface module may be configured to interface the device to the data recording devices in the host vehicle via one or more of optical connections, wired connections or wireless connections. Providing an optical or wireless connection between the interface module and the recording device has a number of advantages including, an ability to transmit high-bandwidth signals, light weight, ease of installation, and lower-costs for example.

In one or more embodiments, the interface module is configured to interface the device to at least one image recording device positioned at different sites around the host vehicle to record image data. The interface module may also be configured to adjust at least one of the frame rate, number of vertical pixels, number of horizontal pixels, resolution and image data encoding method of the image recording device based on the predefined criterion. The image data from the image recording devices may be stitched into a mosaic image. An advantage that stitching the image provides is that very small cameras can be employed thus making it possible to mount the system within a pressurized portion of the fuselage without significant structural change and still allow for easy and rapid removal of the system for maintenance.

In one or more embodiments, image data is continuously monitored by at least one of computer aided visual inspection of the host vehicle surfaces or three dimensional (3D) object recognition and relative position estimation of the host vehicle surfaces. Advantageously, monitoring for changes in the image data has a number of safety advantages. For example, periodically monitoring of the image data affirms the presence and condition of the control surfaces of the host vehicle, thereby providing a high degree of physical safety.

In one or more embodiments, the ejectable parts of the device are enclosed in a housing configured to protect the data stored in the memory module.

Brief Description of Drawings

The invention will now be described in further detail by reference to the accompanying drawings. It is to be understood that the particularity of the drawings does not superseded the generality of the preceding description of the invention.

FIG. 1 shows a schematic diagram of recording device adapted according to an embodiment of the invention;
FIG. 2 shows a recording device adapted according to an embodiment of the invention;
FIG. 3 shows a simplified diagram of recording device adapted according to an embodiment of the invention;
FIG. 4 shows a simplified diagram of a recording device adapted according to an embodiment of the invention in a host vehicle;
FIG. 5 shows a deployment scenario of a recording device adapted to an embodiment of the invention; and
FIG. 6 shows the steps implemented a recording device adapted to an embodiment of the invention.

**Detailed Description**

The invention is suitable for deployment from a host vehicle, the host vehicle being an aircraft and it will be convenient to describe the invention in relation to that exemplary, but non-limiting, application. However, it equally applies to other host flying vehicles including, helicopters, drones, spacecraft, missiles, rockets paratroopers etc.

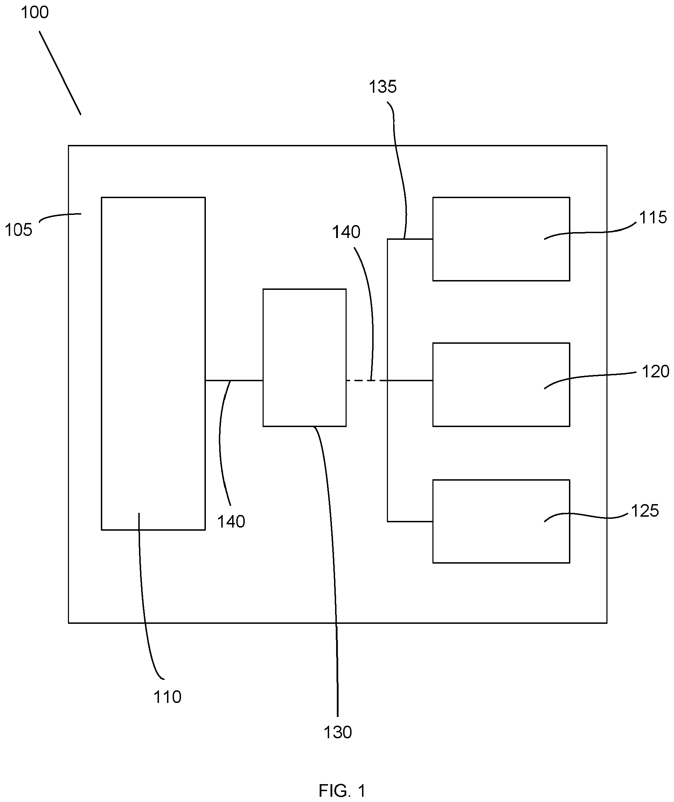

Referring firstly to FIG. 1, there is shown a schematic diagram 100 illustrating how a recording device 110 may be used in conjunction with other data recording devices 115, 120, 125 in a host vehicle 105. In an embodiment of the invention, the host vehicle 105 may be an aircraft including a flight data recorder (FDR) 115, cockpit voice recorder (CVR) 120 and a cockpit image recorder 125. Cockpit image recorders contain provisions for analog or digital cameras as a video source. However, it will be appreciated that additional or alternative data recording devices may be employed, such as voyage data recorders in the case of the host vehicle 105 being a ship, for example. Such devices are typically designed to withstand the extreme shock, impact, pressure and heat, which could be associated with an aircraft or marine incident (fire, explosion, collision, sinking, etc.). However, the invention is suitable to interface with any instrument, for example analog or digital cameras, a GPS module (i.e., digital input), an accelerometer or synchro (i.e., analog input) or an inertia switch (i.e., discreet input). Digital cameras may provide information that would supplement existing CVR and FDR data in accident investigations.

According to the embodiment shown, FDR 115, CVR 120 and cockpit image recorder 125 are electrically connected 135 to the recording device 110 through interface 130. The recording device 110 is connected in parallel, with interface 130 isolated from source resistances external to the FDR 115, CVR 120 and cockpit image recorder 125, thereby preserving a high common mode rejection ratio. Also, interface 130 provides a high input impedance (i.e., 10 M or 10 G $\Omega$) for any signals emanating from the FDR 115, CVR 120 and cockpit image recorder 125 so that it is not considered a significant load to potentially sensitive instruments.

In one or more embodiments, the cockpit image recorder 125 may comprise a plurality of image recorders (e.g., video cameras) positioned at different sites around the aircraft (e.g., cameras may be located in the cockpit, passenger cabin area, cargo holds, aircraft exterior and/or at any other location likely to be of interest to investigators). For example, small cameras may be arranged to provide multiple views of the exterior of the aircraft for capture by the recording device. The views or images may provide stitched video to form an omniview or mosaic of the each wing, horizontal stabiliser or other control surface. Very small cameras can be employed thus making it possible to mount the system within a pressurized portion of the fuselage without significant structural change and still allow for easy and rapid removal of the system for maintenance.

Cameras may be Charged-Couple Device (CCD) cameras or other digital imaging type cameras. Optionally, cameras may comprise infrared cameras. The infrared camera is particularly useful, for example, for discerning points with elevated temperature; in fire, smoke or other obscured vision situations. As used herein, the terms "video" and "image" include camera data in either the visual or infrared spectrums. Cameras, particularly internal cameras, i.e., those in the cockpit or cargo hold, may also be equipped with audio. The audio may be useful for detecting explosions and the like, or the sounds associated with an in-flight breakup of an aircraft.

Advantageously, providing a stitched video feed, allows for large areas of the aircraft to be continuously recorded or monitored (e.g., by computer aided visual inspection of aircraft surfaces or 3D object recognition and relative position estimation). Furthermore, framerates, resolution, or the interval in which images are captured, can be adjusted according to the state of the aircraft.

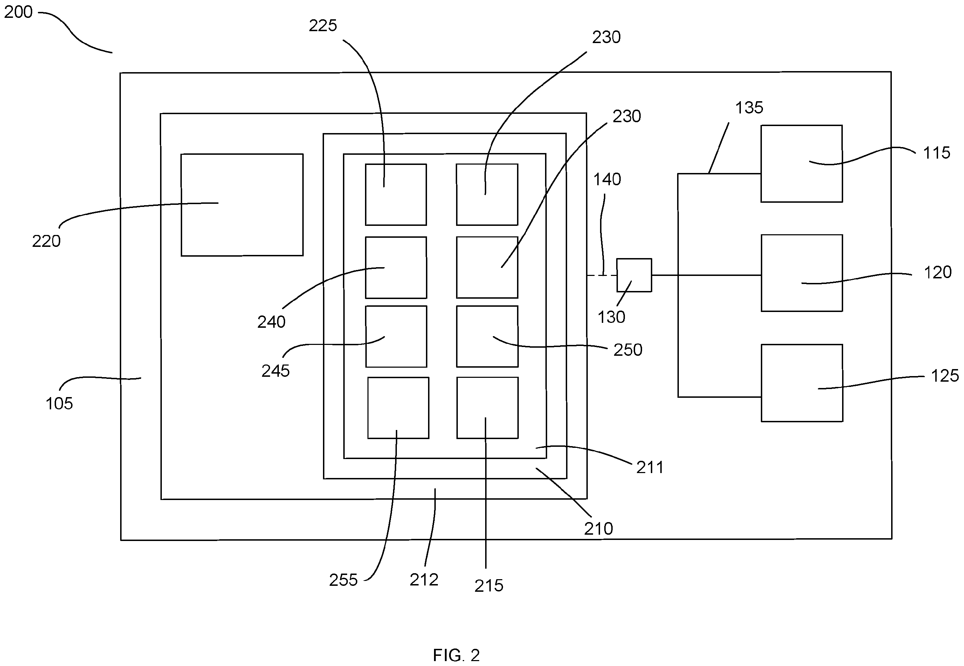

As further discussed below with reference to FIG. 2, prior to data being recorded, the data may be parsed to determine whether it meets predefined criterion stored in a controller. The predefined criteria may relate to the state of the host vehicle 105, for example the host vehicle's position in space and time, such as vertical or horizontal acceleration. In one or more embodiments, the framerate or resolution of the video feed can be adjusted based on acceleration (e.g., by an angular speed sensor or an acceleration sensor), or another parameter, such that a balance is struck between the quality of the recorded images and capacity of the recording device 110. It will be appreciated that during normal flight, the video feed would be largely static and unlikely be of any interest to accident investigators, whereas in the event of a sudden change in altitude, the position of the control surfaces or any damage to the control surfaces may be of interest.

In one or more embodiments, interface 130 is configured to connect the recording device 110 to the FDR 115, CVR 120 and cockpit image recorder 125 via an optical connection 140 or wireless connection and those skilled in the art will recognize suitable designs for providing the stated functions, for example a digital fibre optic converter pair designed to transmit analog and digital signals to a remote location via fibre optic cable. In some instances, the interface 130 may be connected to a flight data recorder data bus, e.g., ARINC 717 data bus or equivalent and/or to an avionics data bus e.g., ARINC 429 data bus or equivalent, in a read-only mode to receive data from these buses and convert them to a multiplexed optical or wireless signal to then send to the recording device 110 in a location remote from interface 130. Providing an optical or wireless connection 140 between interface 130 and the recording device 110 has a number of advantages including, an ability to transmit high-bandwidth signals, light weight, ease of installation, and lower-costs for example. It will be appreciated by those skilled in the art that cables with a large gauge may be needed, to carry large currents and minimise voltage drop over long distances. Hence, cables in known secondary recording systems (e.g., quick access recorders) can add significant weight to aircraft, particularly when wiring spans from the empennage/tailcone of an aircraft to the cockpit/flight deck.

Several commercially available FDRs and CVRs are equipped with an Ethernet interface and contain provisions for analog or digital cameras as a video source. To support such recorders the interface 130 may be connected directly to one or more recorders and transport data over TCP/IP through a twisted pair cable (e.g., category 5 or 6 cable), for example. In this regard, the interface 130 may act as a simple pass through, network switch, or relay. Providing a network switch has an advantage of being able to simultaneously distribute data to a plurality of recording devices 110 in addition to providing power to the device 110 over Ethernet (PoE). In this configuration, the PoE connection may also eliminate the need for a nearby power supply. Additionally or alternatively, Ethernet may be transmitted over the power lines supplying power to the device 110 via the superposition of a low-energy information signal to the power wave, or the like.

Referring now to FIG. 2, there is shown a schematic diagram 200 illustrating the components of recording device 210 according to an embodiment of the invention. The recording device is located within host vehicle 105 and divided into an ejectable part 211 and a non-ejectable part 212 e.g., a part configured to remain on the host vehicle 105, an aircraft. The ejectable part 211 is electrically connected to the non-ejectable part 212 via coupling 220. In one embodiment, at least part of the coupling 220 is configured to be disposed in a contacting relationship with interface 140 such that electrical continuity is established between it and one or more electrical wiring device contacts of the ejectable part 211. Those skilled in the art will recognize suitable designs for providing the stated functions, for example, conductive spring loaded pins on a PCB assembly adapted to engage a corresponding pad disposed on the skin of the host vehicle 105, or on a surface of the non-ejectable part 212. As will be appreciated the connection may be effected through a hermetic feedthrough or be hermetically sealed with a closure member, suitable gasket, adhesive, resin material, or the like.

In implementations where an optical or wireless connection 140 between the interface 130 and the recording device 210 is employed, the coupling may provide a connection for a single multiplexed optical signal and a connection for conventional aircraft power, such as 115 VAC or 28 VDC. The current rating of the coupling and any feeder cables can be high for a given power transmission requirement, and those skilled in the art will recognise suitable couplings for providing the stated functions. Furthermore, the electrical connection provided by the coupling 220 may be realised via inductive coupling elements or the like. Inductive coupling elements avoid the problems of pin-type connectors, including not having to drill or cut the aircraft skin (generally pressurised), as well as being detachable from the aircraft skin by simply exerting sufficient tension. Similarly, the ferrule diameter of several commercially available optical fiber connectors is very small (e.g., in the order of 2.5 mm), such that any holes required to be drilled or cut in the aircraft skin to pass through an optical connection would be relatively small. Many optical fiber connections have an added advantage of being spring-loaded, so the fiber faces are pressed together with the connectors, and are "snap" mated (i.e., push-on/pull-off). Providing a snap action connection means that the recording device 110 may be conveniently separated from the host vehicle 105.

The coupling 220 may be adhered to the aircraft skin with an adhesive and those skilled in the art will recognize suitable adhesives for providing the stated functions, for example, epoxy resins or modified resins with hardeners such as epoxy novalac resin, acrylic resins, cyanoacrylates, UV-curable polymers, and other well-known adhesive resins. Additionally or alternatively, the coupling 220 may be attached to the aircraft skin via a mounting plate by clamping it with threaded bolts, fasteners, other threaded connections or a combination of any of those. A mechanical seal may also be provided to prevent leakage into the aircraft from outside atmosphere (e.g., silicone, rubber, etc.).

Data, such as conventional flight data from an ARINC 429 and ARINC 717 data bus or equivalent, is independently recorded in memory module 255 from interface 130. It will be appreciated that ARINC 429 and ARINC 717 data buses are used to exemplify a best mode of implementing the invention. Any other suitable data buses may be used instead of ARINC 429 and ARINC 717. The memory module 255 may be any suitable commercial off-the-shelf (COTS) device, as opposed to a purpose-built device. The memory module 255 is thus any suitable COTS memory, such as non-volatile solid-state memory with a capacity of 256GBs. However, it will be appreciated that other types of memory may be used with smaller capacities, for example, 16GB. Non-volatile solid-state memory has a number of desirable characteristics, including low power consumption, resistance against vibrational shock, high speed of operation and the like as compared with other devices such as magnetic memory.

Prior to the data being independently recorded, the data may be parsed to determine whether it meets predefined criterion stored in a controller. The predefined criteria may relate to the state of the host vehicle 105, for example the host vehicle's position in space and time, such as vertical or horizontal acceleration, speed, or deviation from a flight plan. It will be appreciated by those skilled in the art that vertical acceleration (g) or vertical speed (vs) data may be parsed from a conventional ARINC 717 stream as being mandatory sensed parameters of flight data recorders. It will also be appreciated by those skilled in the art that the following discussion may also be applicable to other mandatory sensed parameters of flight data recorders in many aspects. Often mandatory sensed parameters are defined by government agencies, for example Federal Aviation Agency (FAA) regulations in the United States to provide historical recording of certain mandatory flight parameters.

Mandatory sensed parameters, which often must be continuously recorded during the operational flight profile of the aircraft, include a minimum number of functional parameters considered essential for reconstructing the aircraft flight profile in investigation proceedings. Present recording requirements specify a minimum 25 hour interval. In a number of embodiments, in addition to independently storing the parameters in the memory module 255, the controller can parse "live" data as outlined below.

An example of a mandatory sensed parameter is vertical acceleration. Accelerometers often form part of an Inertial Navigation System or Inertial Reference Unit (IRS) used on aircraft. The output of an accelerometer is general in the order of 0 to 5VDC (nominal), which varies on each axis, for example Up +6g may output 5000mV whereas down -3g may output 200mV. These outputs may be fed into a Flight Data Acquisition Unit (FDAU) that receives various discrete, analog and digital parameters from a number of sensors and avionic systems and then routes them to an FDR. Information from the FDAU to the FDR is sent via specific data frames, which depend on the aircraft manufacturer.

The data frame layout consists of a snapshot of many avionic subsystems on an aircraft. As previously described, the ARINC 717 data bus is one is commonly used format, each frame consists the same data a different snapshot in time. Data, such as conventional flight data from an ARINC 717 data bus or equivalent, is independently recorded in memory module 255 from interface 130 and processed. Each frame is broken up into a number of sub-frames. At the start of each sub-frame is a unique sync word that is used by the controller to synchronize with the incoming data. Words are 12 bits long and are nominally transmitted at 64 or 256 words per second, though the ARINC 717 specification also permits 128, 512 and 1024 words per second.

Most parameters are recorded at least once every four seconds, i.e., in every frame. The recording rate of a regular frame parameter is directly related with the number of times that parameter appears in the dataframe. If the parameter is recorded once per second (1 Hz), it appears once per subframe and a total of four times perframe. The parameters can be output at lower rates of 1/4 Hz or 1/2 Hz, and appear in one or two subframes, respectively.

For example, an airspeed parameter may be located at word 19 and coded on 12 bits (i.e., bits 12-1). As will be appreciated by those skilled in the art, coding a binary value on 12 bits from 000000000000 to 111111111111 is equivalent to a decimal coding from 0 to $2^{12}$ -1, or from 0 to 4095. The decimal values may be applied to a conversion factor by the controller i.e., to convert the raw data into an engineering unit per Table 1 and Equation 1.

Table 1

| Values | Decimal | Engineering Units |
|---|---|---|
| Minimum | 0 | 0 m/s (0 kt) |

(continued)

| Values | Decimal | Engineering Units |
|---|---|---|
| Neutral / mid-point | 2047 | 263 m/s (512 kt) |
| Maximum | 4095 | 527 m/s (1024 kt) |

$$Y = A_0 + A_1 * X \qquad\qquad (1)$$

where, Y = output in engineering units and X = input in decimal.

As will be appreciated by the above airspeed example, the raw value to engineering conversion is linear and transforms a binary (raw) value ranging from 0 to 4095 into an airspeed ranging from 0 to 1024 kts, i.e., $Y(kt) = 0.25006 * X$, wherein 1 kt is 0.514 m/s.

The conversion factor can be stored in the controller and convert raw data into engineering units where they can be processed and analysed in real time or near real time. In a number of embodiments, the processing and analysis is used for verification and validation purposes. For example, a sink rate may be derived from on board electronics, namely an internal accelerometer, which may be compared with a radio altitude signal received from a radio altimeter using a pitch attitude signal, which is readily available from the flight data. If the returned data is comparable, an algorithm can determine whether or not to send a signal to eject the ejectable part 211 retained within the non-ejectable part 212 and also enable the wireless transmitter 250 to transmit data stored in the memory module 255 to a remote server or the like.

By way of non-limiting example, vertical acceleration may be parsed to determine if an average acceleration value over a set time interval exceeds the structural limitations of the host vehicle prior to the occurrence of a catastrophic failure event 105 (e.g., a vertical acceleration (G) equal to or more than 3 g at aircraft Centre of Gravity (CG) or, a vertical speed (vs) equal to or more than 6 m/s (20 ft/sec.)). If that value is exceeded a controller may enable a wireless transmitter 250 to transmit data stored in the memory module 255 to a remote server or the like. That way, data is made readily available to transport safety organisations, vehicle operators, vehicle manufactures etc.

In another non-limiting example, the pitch angle (attitude) may be parsed (either directly from a sensor or derived from aircraft speed) to determine if an average acceleration value over a set time interval will result in the aircraft impacting with the ground (e.g., 75-degree-nose-down attitude, at a speed of 250 knots (463 km/h), at 700 m, over 20 seconds). If that value is exceeded the controller may send a signal to eject the ejectable part 211 retained within the non-ejectable part 212 and also enable the wireless transmitter 250 to transmit data stored in the memory module 255 to a remote server or the like.

In another non-limiting example, a phase of flight may be determined by a weight-on-wheels, a vertical speed, or the altitude and the airspeed. By way of non-limiting example, the "weight-on-wheels" information may be parsed (either directly from a sensor or derived from aircraft speed) to determine if an aircraft is on the ground and may allow transmission of flight data without interrogation or ejection of the ejectable part 211. Advantageously, the system also contemplates defining when operation of wireless transmitters is prohibited, and when operation is permitted. The recording device 110 may be able to receive "weight-on-wheels" information for determining if the aircraft is on the ground, as well as an altimeter for providing altitude information to the recording device 110 during flight of the aircraft. There may be operational and regulatory advantages in only allowing transmission through interlock mechanisms during general use (i.e., not in an emergency) when the aircraft is on the ground, particularly for common wireless technologies such as CDMA, GSM, WiFi, WiMax, LTE or any other wireless technologies.

In another implementation, an inertia switch may be used for crash, impact and velocity detection. Inertia switches, inertia sensors and inertial shock detectors have a number of advantages including lower-costs, simplicity, and proven reliability in the extreme conditions encountered in an aircraft crash, for example.

The wireless transmitter 250 may transmit the flight data according to one or more of an 802.11, GSM, GPRS, EDGE, UMTS, W-CDMA, LTE, CDMA, TDMA, FDMA, EVDO, CDMA2000, UMB and WIMAX protocols. In one or more embodiments, to preserve power, the recording device 210 may also include a wireless receiver configured to receive wireless data, including wireless interrogation data, such that the wireless transmitter 250 will only transmit the stored data upon receipt of the wireless interrogation data. Monitoring for the presence of interrogation signals from an interrogator (i.e., a field device) during the minimal power conserving state also has a number of security advantages. For example, periodically monitoring of interrogation affirms the presence and condition of the ejectable part 211, thereby providing a high degree of physical security. This method is best suited to applications wherein the ejectable part 211 is not necessarily "lost", but it is hazardous to retrieve it or where the data may be classified. Waiting for a wireless receiver to receive interrogation data before transmitting the stored data has a number of other operational advantages including preserving power when the required signal-to-noise ratio for certain transmission distances is too high, which may in turn require a high transmitter signal power; the antenna gain of the wireless transmitter 250 may be lowered by physical damage; or, the sensitivity of the up link receiver at the base station (i.e., a satellite) may be decreased by attenuation from clouds, rain, salt fog, or the like.

In one or more embodiments, the controller may determine what protocol the wireless transmitter 250 uses to transmit the flight data based on what protocol is anticipated to consume the least amount of power or bandwidth. As will be appreciated, there may be operational and cost advantages in only allowing transmission on certain networks or over certain protocols particularly during general use (i.e., not in an emergency) when the aircraft is on the ground, particularly for common wireless technologies such as 3G or LTE where network roaming charges can be significant.

The protocol may also be selected based on the received signal strength, which may indicate the amount of power required to transmit back to a receiver, base station, or the like.

In the event the host vehicle is "lost", the ejectable part 211 may include a location module 245 configured to determine the location of the device. The location module 245 includes one or more of a global positioning system and an inertial navigation system. While location information can generally be determined from the conventional flight data stream (from a number of parameters including the GPS position (x,y,z), velocity (x,y,z), acceleration (x,y,z), roll, pitch, heading, three-axis angular rate and Coordinated Universal Time (UTC) data), providing an additional location module in the ejectable part 211 adds a layer of redundancy in the event of any of the above system failing (i.e., the GPS/GNSS sensor or inertial measurement system interface in the host vehicle). The location module 245 may be configured to receive signals according to one of more of GPS, GNSS (Global Navigation Satellite System), SBAS (Satellite-based Augmentation System), Galileo Navigation Satellite System, BeiDou Navigation Satellite System, Glonass (GLObal NAvigation Satellite System) and QZSS (Quasi-Zenith Satellite System).

In one or more embodiments, the estimated trajectory of the ejectable part 211 can be calculated from acceleration and velocity data. As the ejectable part 211 falls, it undergoes a vertical acceleration attributed to the downward force of gravity which acts upon it. The ejectable part's 211 motion could be approximated as projectile motion. However, as air resistance and wind potentially retards the ejectable part's 211 forward movement, other factors can be included into the estimated trajectory, including the effects of drag. As will be appreciated, drag depends on the density of air, the square of the velocity, the air's viscosity and compressibility, the size and shape of the ejectable part 211, and it's inclination to the flow. One way to deal with the complex dependencies is to characterize them into a single drag coefficient variable and use the general drag equation. Drag coefficients can be determined experimentally using a wind tunnel and those skilled in the art will recognise how to derive a suitable drag coefficient from that experimental data.

In one or more embodiments, the ejectable part 211 includes an inflatable flotation device 225 configured to be activated in water. The inflatable floatation device 225 inflates in response to submersion of the ejectable part 211 in water thereby causing the ejectable part 211 to be floated to the surface of the water for ease in retrieving the ejectable part 211. One example of an inflatable floatation device 225 uses a compressed gas container (e.g., compressed carbon dioxide) configured to open into an inflatable article such as a balloon. Generally speaking, the compressed gas container also includes a means for rupturing a seal across a port or the like and those skilled in the art will recognise suitable designs for providing the stated functions.

In one or more embodiments, the ejectable part 211 also includes a self-righting means configured to return the ejectable part 211 to a neutral configuration in water. The material used to manufacture the device is selected so that the ejectable part 211 is buoyant, and has sufficient buoyancy to cause it rise to the surface of the water rapidly. The buoyant force causes the apparatus to float to the surface where it may wirelessly transmit data. As will be later discussed, the device is weighted to be self-righting so that regardless of the orientation of the ejectable part 211 at the time of release, the wireless transmitter 250 and solar cells 270 always assumes an operative orientation so that wireless transmitter 250 and solar cells 270 remain substantially upwardly directed with respect to the surface of the water, thereby permitting the transmitter to transmit away from the surface of the water.

Additionally or alternatively, the ejectable part 211 may have rigid construction and sealed hollow interior that provides the buoyancy necessary for the internal components. For example, the ejectable part 211 may be made from plastic configured with a double walled structure that provides the necessary buoyance and those skilled in the art will recognise suitable designs for providing the stated functions, such as a double walled air filled form made from PET.

In another embodiment, the ejectable part 211 is self-righting. Self-righting may be achieved by filling the ejectable part 211 with urethane foam and providing a weighted ballast that it remains substantially upwardly directed with respect to the surface of the water. The ballast may be internal or external i.e., attached to the bottom of the ejectable part 211 to provide a larger draft (e.g., the vertical distance between the surface of the water and the bottom of the ejectable part 211). As will be appreciated by those skilled in the art, providing a larger draft may provide stability in strong wind, and large seas, as the centre of gravity is lower (i.e., ballast over the bottom of the ejectable part 211).

In one or more embodiments, the ejectable part 211 also includes a deployable means 240 to slow descent of the ejectable part 211 to a landing site. The deployable means 240 may include a parachute, parafoil or the like. Parachutes or parafoils are generally made out of light, strong fabric, originally silk, now most commonly nylon. They are typically dome-shaped, but vary, with rectangles, inverted domes, and others found. The parachute or parafoil of conventional design may be located within the interior of the ejectable part 211 and attached to a cord that tethers the ejectable part 211 to the parachute. It will be appreciated by those skilled in the art that the parachute or parafoil may be folded to form a bundle and be retained in bundle form by an actuator that, if actuated, releases the parachute or parafoil for deployment. It is envisaged that from its tightly bundled (and/or rolled or folded) compact form it will unfold and deploy in the wind. In some implementations, the parachute or parafoil may be retained by a heat meltable cord. For example, a heating element extending at least a short reach of the cord, and a control device for supplying power to the heating element to sever the heat meltable cord may be provided to assist in deploying the parachute or parafoil to slow decent of the ejectable part 211. There are some advantages in providing a parachute or parafoil including, lower-costs, simplicity, and ease of implementation, for example.

The deployable means 240 to slow descent of the ejectable part 211 to the landing site need not be limited to parachutes and parafoils i.e. devices used to slow the motion of the ejectable part 211 through the air by creating drag. In one or more embodiments, the deployable means 240 includes a wing assembly and propulsion system including one or more rotors disposed on the wing assembly to generate lift. An example of such a wing assembly may be referred to as a quadcopter. Although it is to be understood that within the scope of this disclosure the deployable means 240 may comprise any number of rotors and any number of wing assemblies. The deployable means 240 may therefore be a helicopter, tricopter, a quadcopter, etc. The propulsion system for providing lift and consequently aerial movement and/or slowing decent of the ejectable part 211 may be provided by known propulsion means, such as electric motors with a rotor.

Airborne motion of the ejectable part 211 may be controlled by rotation of rotor blades and by adjustment of the angular velocities of each rotor by known methods to provide adjustment of lift and torque to support stable flight of the ejectable part 211, generally, via feedback from an inertial measurement unit (IMU) and an altimeter module. The rotors may be arranged in a substantially rectangular configuration about the centre of the ejectable part 211 and centre of mass. In a particular embodiment, the rotors will rotate in a common plane above rotor arms, for example, to generate thrust in an upwards direction. The rotor arms may be retained in the ejectable part 211 until it is deployed, and those skilled in the art will recognize suitable designs for providing the stated functions, for example, a spring biasing means to effect snap-action release of the rotor arms.

In one or more embodiments, the ejectable part 211 may be controlled by an autopilot module. The autopilot module, which may be a commercially available off the shelf (COTS) component, is configured such that once deployed, the ejectable part 211 may transition to an autonomous phase of flight. It will be appreciated that the autopilot module may interface with the IMU and the altimeter module to support the autonomous phase of flight and guide the ejectable part to a desired landing site.

Advantageously, guiding the ejectable part 211 to the desired landing site some distance away from the part may separate any data stored from the calamity, impact or fire associated with a crash (e.g., a predetermined distance from the site of ejection). In the event of ejection overwater, the ejectable part 211 may also be guided to an island or the like.

In one or more embodiments, the ejectable part 211 includes an underwater locating beacon (ULB) if one or more of the systems designed to keep the ejectable part 211 above the surface of the water fail and the ejectable part 211 sinks in the water. A controller may control operation of an audible pinger. Preferably, when operable, the audible pinger sends out "pings" at a frequency of 37.5 kHz. This is the frequency of pings that is being sought by rescuers and salvagers of a downed aircraft. Typically, the pinger emits pings every second or two, about 30 to 60 pings per minute. The ULB is of a largely conventional form factor, for example cylindrical in shape and can survive crash forces of 6000 g's (0.5 ms) and ocean depths of 20,000 feet. A small contact pad on one end of the ULB is shorted by salt or fresh water contact activating the beacon.

In one or more embodiments, the ejectable part 211 includes an independent power supply 260 configured to provided power to each of the components (225, 230, 235, 240, 245, 250, 255) of the ejectable part 211, as discussed above. The power supply 260 may include rechargeable batteries, such as Li-Ion batteries or Lithium-Iron-Phosphate batteries. Additionally, solar cells 270 may be provided to charge the rechargeable batteries via a charge controller. A charge controller manages the flow of current from the solar panel to optimise the state of charge of the battery and to maximize the useful life of the battery. It will be appreciated that additional circuitry may also be provided to monitor the discharge level of the ejectable part 211 to limit deep discharging etc.

In one or more embodiments, the charge controller may also electrically disconnect the batteries from one or more of the components auxiliary to the power supply 260 to independently charge the batteries from the solar panel 270. When the batteries are sufficiently charged to power an ELT or wireless transmitter, for example, the charge controller may electrically reconnect the batteries. Solid-state relays have a number of desirable characteristics to disconnect and reconnect the batteries including requiring only a small external voltage to be applied across its control terminals (i.e., low power consumption), resistance against vibrational shock (i.e., no moving parts) and the like as compared with other devices such as electromechanical relays.

The remaining elements in FIG. 2 are identical to FIG. 1 and so share the same references.

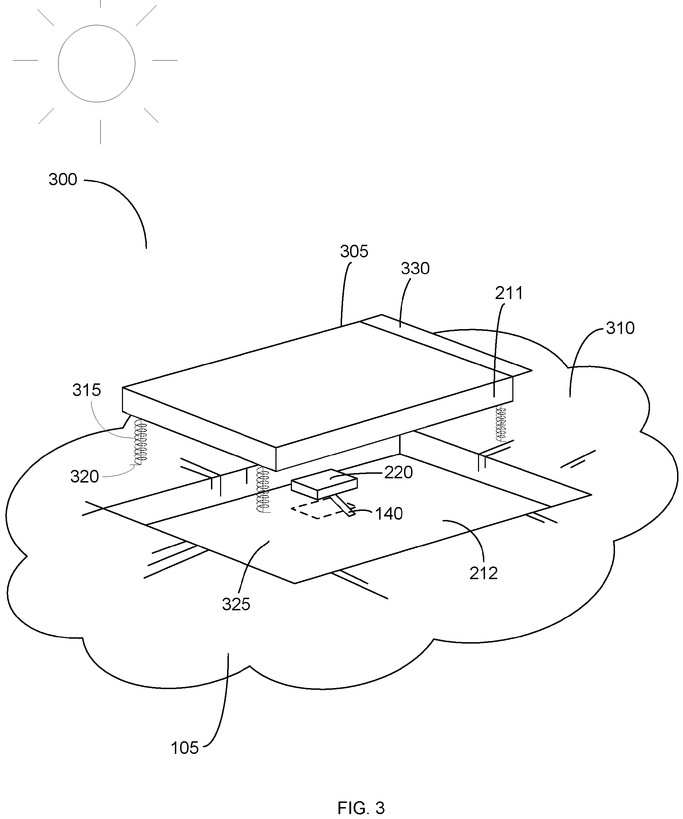

Referring now to FIG. 3, there is shown a recording device located in a recess formed 325 in the skin 310 of host vehicle 105. The ejectable part 211 is shown removed from the non-ejectable part 212. The non-ejectable part 212 contains a quick-release coupling 220 and interface 140, which when connected, connects the ejectable part 211 to other data recording devices in the host vehicle 105. Here, the host vehicle 105 is an aircraft including a flight data recorder (FDR) 115, cockpit voice recorder (CVR) 120 and a cockpit image recorder 125. As discussed with reference to FIG. 2, data, such as conventional flight data from an ARINC 429 and ARINC 717 data bus or equivalent, is independently recorded in a memory module from the interface 140.

In one or more embodiments, the ejectable part 211 is retained within the non-ejectable part 212 by a shank member 320 electrically actuated by solenoid 315. The shank member 320, in the retained state, may be locked by extending into a recess in a cam to prevent pivoting or the like. When the predefined criteria, as discussed with reference to FIG. 2, are met, the shank from the solenoid may withdraw from the recess in the cam so that the cam is free to pivot away from the shank freeing the ejectable part 211 from the non-ejectable part 212. In some implementations, the solenoid 315 may be biased with a spring to assist in ejecting the ejectable part 211 up and away from the aircraft. It will be appreciated that in addition to a spring loaded solenoid, other electromechanical actuators capable of ejecting the ejectable part 211 may be employed.

Retaining the ejectable part 211 by a spring loaded solenoid or other electromechanical actuator from positioned on the ejectable part 211 has a number advantages including requiring less modifications to the host vehicle, lower-costs, simplicity, and ease of implementation, for example.

While FIG. 3 shows four spring loaded solenoids 315, it will be appreciated that any number of solenoids may be employed. In one or more embodiments, a single solenoid may be employed towards a portion of the ejectable part 211 facing the airstream encountered during the host vehicle 105 movement. It is understood that a spoiler 330 may also be projected in order to create drag and so aid in the ejection. It will be appreciated that the spoiler 330 may be coupled to the aircraft by a thin frangible synthetic plastic membrane, resilient retention clips, friction, or the like so as to support aerodynamic flight before ejection.

The ejectable part 211 also includes a plurality of solar cells with high mechanical strength electrically interconnected to form a solar cell array 305. As shown, the top side of the solar cell array 305 faces the sun during normal operation. The materials on the top side of the ejectable part 211 are transparent by nature or thickness to allow solar radiation to shine through.

The remaining elements in FIG. 3 are identical to FIG. 1 and FIG. 2 and so share the same references.

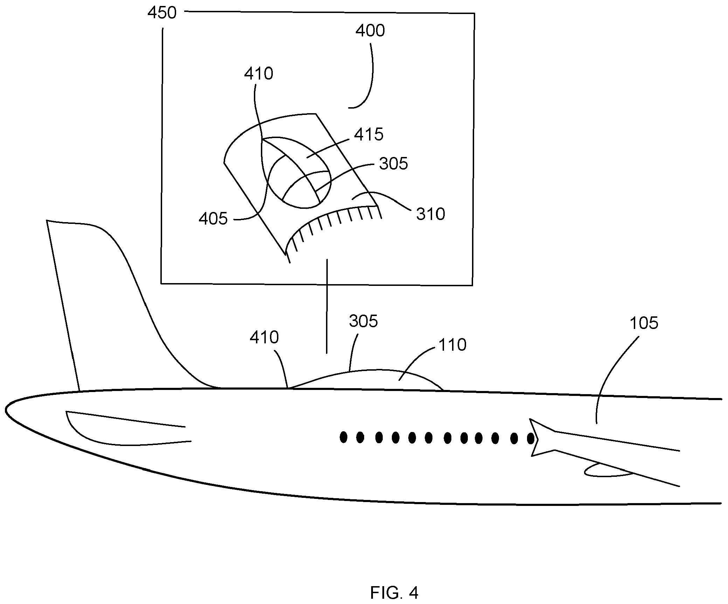

Referring now to FIG. 4, there is shown a recording device 110 located substantially on the skin 310 of host vehicle 105. An isometric view of the recording device 110 is also shown in an exploded view encircled 450. The recording device 110 has an aerodynamic shape. The aft portion tapers smoothly to a trailing edge 410 and so contributes to a smooth low-drag symmetrical aerofoil aerodynamic shape. According to the embodiment shown, the recording device 110 is located in front of the vertical stabilizer. The top surface may include a radome or similar cover 415 enclosing an antenna array, or the like. The cover structure 415 may be made from a dielectric panel having satisfactory broad-band qualities for use in radomes, such as a protective non-conductive acrylic coating. Preferably, the protective cover is also effectively optically transparent to encapsulate or otherwise house solar cells to protect them against ambient-caused degradation. As will be appreciated, in some applications the recording device 110 may be used in very low temperatures (at 36,000 feet the standard outside air temperature is about -60°C). Therefore, it may be desirable to form the cover structure with a variable thickness such that it may act as a focusing lens to adjust the incident light beam dispersal from the sun onto the solar cells and/or to heat temperature sensitive electronic components. Additionally or alternatively, a heat exchanger thermally coupled to the solar cells and/or temperature sensitive components may also be employed and those and those skilled in the art will recognize suitable designs for providing the stated functions, for example a thermoelectric heater using the Peltier effect.

In the embodiments using a solar panel array 305, this location introduces an advantage because the solar panel array 305 will be oriented in the optimum position towards the sun to gather the most incident sunlight. However, it will be appreciated by those skilled in the art that the recording device 110 may be attached to the horizontal or vertical stabilizers of an aircraft. Furthermore, positioning the recording device close to the FDR and CVR (i.e., in the empennage/tailcone section) may reduce the wiring span in those embodiments employing a wiring harness between the FDR and/or CVR to the recording device 110.

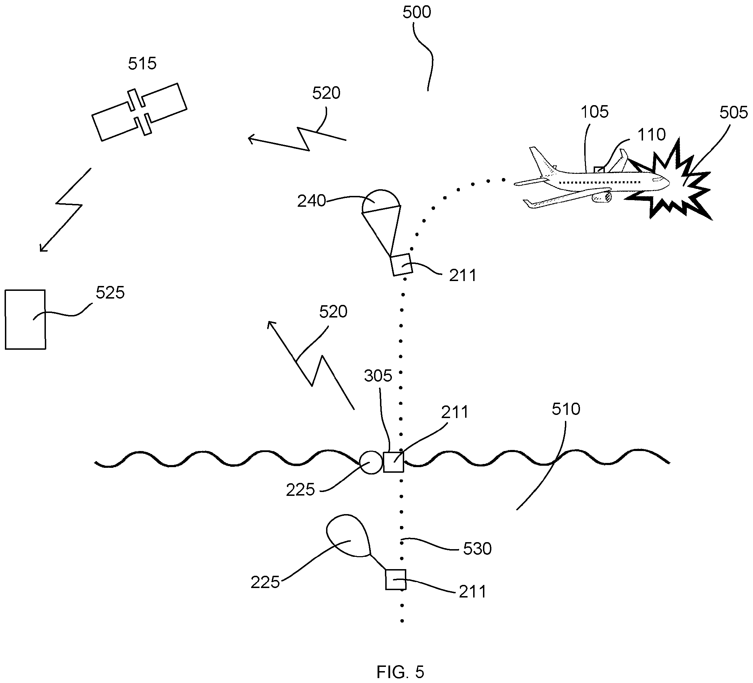

Referring now to FIG. 5, there is shown a deployment scenario 500 of the recording device 110 adapted to an embodiment of the invention. The host vehicle 105, shown as an aircraft, has experienced rapid cabin depressurisation as the result of a fire 505. Those skilled in the art will recognise that a loss of cabin pressure may be a monitored aircraft parameter recorded on an FDR from an ARINC 717 data stream. Through parsing the ARINC 717 data stream, the loss of cabin pressure has been determined from a moving average of cabin pressure. A loss of cabin pressure is considered a catastrophic failure event for the aircraft. Accordingly, the recording device 110 has initiated transmission of the data 520 to a server 525 via satellite 551 and simultaneously ejected an ejected part 211.

In embodiments employing a parachute 240, the parachute is deployed when it is safely removed from the aircraft. Those skilled in the art will appreciate that this may be determined by an altimeter or the like. After the parachute 240 is deployed, the ejectable part 211 lands in water 510 where it begins to sink along line 530. In embodiments employing an inflatable floatation device configured to be activated in water, the ejected part 211 is subsequently floated to the surface of the water for ease in retrieving the ejectable part 211. Once on the surface of the water, data may continue to transmit, including location data to let rescuers know that the aircraft is in potential danger. In the event of rough seas, the self-righting means may contribute in returning the ejectable part 211 to a neutral configuration in water such that any antennas or solar panels 305 substantially faces the sky during normal operation.

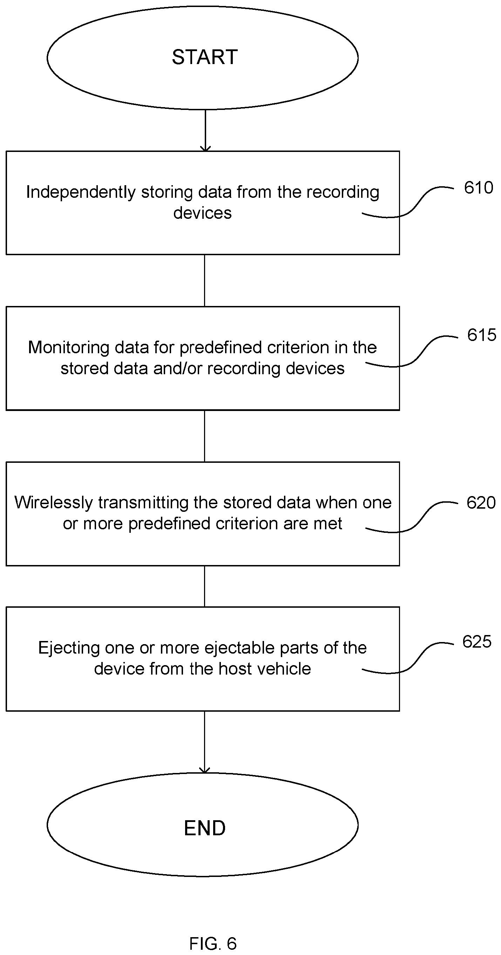

Referring now to FIG. 6, there is shown steps implemented in an embodiment of the data recording device 110. In step 610, data received from data recording devices 115, 120, 125 in a host vehicle 105 is independently stored in memory module 255 for a predefined time or on a circular buffer. The information may be stored in separate partitions in memory specific to the recording device, for example CVR data in one partition and FDR data in another partition. In step 615, the recording device 110 may monitor for predefined criterion in the stored data and/or a data stream from the recording devices 115, 120, 125. The predefined criteria may correlate to those which occur prior to a crash or other catastrophic failure event involving the host vehicle 105, for example a rapid change in vertical acceleration or significant deviation from a flight path. In step 620, the independently stored data may be wirelessly transmitted to a location remote from the host vehicle, for example to a server or field device. In step 625, parts of the recording device 110 may be ejected from the host vehicle. A parachute or parafoil may be executed to slow descent of the ejected part to a landing site. An inflatable flotation device may also be executed upon entry of the ejected parts into water. An independent power supply configured to provide power to the ejected parts of the recording device for an extended period may also be provided. Additionally, solar cells may be provided to charge rechargeable batteries as part of the independent power supply via a charge controller.

Where the terms "comprise", "comprises", "comprised" or "comprising" are used in this specification (including the claims) they are to be interpreted as specifying the presence of the stated features, integers, steps or components, but not precluding the presence of one or more other features, integers, steps or components, or group thereof.

[DELETED]

**Claims**

1. A device (110) for offloading data recorded in a host flying vehicle (105), comprising:

   an interface module (130) configured to interface the device to one or more data recording devices (115, 120, 125) in the host flying vehicle (105);
   a memory module (255) configured to independently store data from the data recording devices (115, 120, 125); and
   a wireless transmitter (250) configured to transmit the stored data when one or more predefined criterion in the stored data and/or recording devices (115, 120, 125) are met;
   **characterized in that**,
   the predefined criterion relates to an acceleration parameter of the host flying vehicle (105) parsed from a conventional ARINC 717 flight data stream.

2. The device of claim 1, further comprising an ejection module configured to separate one or more ejectable parts of the device from the host flying vehicle when the predefined criterion in the stored data are met.

3. The device of claim 1 or 2, further comprising an inflatable floatation device configured to be activated in water.

4. The device of any one of claims 1 to 3, further comprising a self-righting means configured to return the device to a neutral configuration in water allowing for the device to assume an operative orientation so that it remains substantially upwardly directed with respect to the surface of the water.

5. The device of any one of claims 1 to 4, further comprising a deployable means including one or more of parachutes and parafoils to slow descent of the device to a landing site.

6. The device of claim 5, wherein the deployable means includes a wing assembly and propulsion system including one or more rotors disposed on the wing assembly to generate lift.

7. The device of any one of claims 1 to 6, further comprising a location module configured to determine a location of the device.

8. The device of any one of claims 1 to 7, wherein the predefined criterion occurs prior to an occurrence of a catastrophic failure event involving the host flying vehicle.

9. The device of any one of claims 1 to 8, further comprising a wireless receiver configured to receive wireless data, including wireless interrogation data, wherein the wireless transmitter is further configured to transmit the stored data upon receipt of the wireless interrogation data.

10. The device of any one of claims 1 to 9, further comprising an independent power supply configured to provide power to the device for an extended period.

11. The device of any one of claims 1 to 10, wherein the interface module is configured to interface the device to the data recording devices in the host flying vehicle via one or more of optical connections, wired connections or wireless connections.

12. The device of any one of claims 1 to 11, wherein the interface module is configured to interface the device to at least one image recording device positioned at different sites around the host flying vehicle to record image data.

13. The device of claim 12, wherein the interface module is configured to adjust at least one of the frame rate, number of vertical pixels, number of horizontal pixels, resolution and image data encoding method of the image recording device based on the predefined criterion.


**Patentansprüche**

1. Vorrichtung (110) zum Auslagern von Daten, die in einem fliegenden Trägerfahrzeug (105) aufgezeichnet werden, wobei die Vorrichtung Folgendes umfasst:

ein Schnittstellenmodul (130), das dafür konfiguriert ist, die Vorrichtung mit einer oder mehreren Datenaufzeichnungsvorrichtungen (115, 120, 125) in dem fliegenden Trägerfahrzeug (105) zu verbinden,
ein Speichermodul (255), dafür konfiguriert ist, unabhängig Daten von den Datenaufzeichnungsvorrichtungen (115, 120, 125) zu speichern, und
einen drahtlosen Sender (250), der dafür konfiguriert ist, die gespeicherten Daten zu senden, wenn ein oder mehrere vordefinierte Kriterien in den gespeicherten Daten und/oder den Aufzeichnungsvorrichtungen (115, 120, 125) erfüllt sind,
**dadurch gekennzeichnet, dass**
sich das vordefinierte Kriterium auf einen Beschleunigungsparameter des fliegenden Trägerfahrzeugs (105) bezieht, der aus einem herkömmlichen ARINC-717-Flugdatenstrom analysiert wird.

2. Vorrichtung nach Anspruch 1, die ferner ein Ausstoßungsmodul umfasst, das dafür konfiguriert ist, einen oder mehrere ausstoßbare Teile der Vorrichtung von dem fliegenden Trägerfahrzeug zu trennen, wenn die vordefinierten Kriterien in den gespeicherten Daten erfüllt sind.

3. Vorrichtung nach Anspruch 1 oder 2, die ferner eine aufblasbare Schwimmvorrichtung umfasst, die dafür konfiguriert ist, in Wasser aktiviert zu werden.

4. Vorrichtung nach einem der Ansprüche 1 bis 3, die ferner ein Selbstaufrichtungsmittel umfasst, das dafür konfiguriert ist, die Vorrichtung in Wasser zu einer neutralen Konfiguration zurückzuführen, was ermöglicht, dass die Vorrichtung eine betriebsbereite Ausrichtung einnimmt, so dass sie im Wesentlichen in Bezug auf die Oberfläche des Wasser nach oben gerichtet bleibt.

5. Vorrichtung nach einem der Ansprüche 1 bis 4, die ferner ein entfaltbares Mittel umfasst, das eines oder mehrere von Fallschirmen und Flächengleitschirmen einschließt, um einen Sinkflug der Vorrichtung bis zu einer Landungsstelle zu verlangsamen.

6. Vorrichtung nach Anspruch 5, wobei das entfaltbare Mittel eine Tragflächenbaugruppe und ein Antriebssystem, das ein oder mehrere Rotoren einschließt, die an der Tragflächenbaugruppe angeordnet sind, um Auftrieb zu erzeugen, einschließt.

7. Vorrichtung nach einem der Ansprüche 1 bis 6, die ferner ein Positionsbestimmungsmodul umfasst, das dafür konfiguriert ist, eine Position der Vorrichtung zu bestimmen.

8. Vorrichtung nach einem der Ansprüche 1 bis 7, wobei das vordefinierte Kriterium vor einem Auftreten eines katastrophalen Ausfallereignisses auftritt, welches das fliegende Trägerfahrzeug betrifft.

9. Vorrichtung nach einem der Ansprüche 1 bis 8, die ferner einen drahtlosen Empfänger umfasst, der dafür konfiguriert ist, drahtlose Daten, einschließlich von drahtlosen Abfragedaten, zu empfangen, wobei der drahtlose Sender ferner dafür konfiguriert ist, auf einen Empfang der drahtlosen Abfragedaten hin die gespeicherten Daten zu senden.

10. Vorrichtung nach einem der Ansprüche 1 bis 9, die ferner eine unabhängige Energieversorgung umfasst, die dafür konfiguriert ist, für einen ausgedehnten Zeitraum Energie für die Vorrichtung bereitzustellen.

11. Vorrichtung nach einem der Ansprüche 1 bis 10, wobei das Schnittstellenmodul dafür konfiguriert ist, die Vorrichtung über eines oder mehrere von optischen Verbindungen, drahtgebundenen Verbindungen oder drahtlosen Verbindungen mit den Datenaufzeichnungsvorrichtungen in dem fliegenden Trägerfahrzeug zu verbinden.

12. Vorrichtung nach einem der Ansprüche 1 bis 11, wobei das Schnittstellenmodul dafür konfiguriert ist, die Vorrichtung mit mindestens einer Bildaufzeichnungsvorrichtung zu verbinden, die an unterschiedlichen Stellen um das fliegende Trägerfahrzeug positioniert ist, um Bilddaten aufzuzeichnen.

13. Vorrichtung nach Anspruch 12, wobei das Schnittstellenmodul dafür konfiguriert ist, mindestens eines von der Bildwiederholrate, der Anzahl von vertikalen Bildpunkten, der Anzahl von horizontalen Bildpunkten, der Auflösung und dem Bilddaten-Codierungsverfahren der Bildaufzeichnungsvorrichtung auf Grundlage des vorbestimmten Kriteriums einzustellen.

**Revendications**

1. Dispositif (110) de déchargement de données enregistrées dans un véhicule volant hôte (105), comprenant :

   un module d'interface (130) configuré pour établir l'interface du dispositif avec un ou plusieurs dispositifs d'enregistrement de données (115, 120, 125) dans le véhicule volant hôte (105) ;
   un module de mémoire (255) configuré pour sauvegarder indépendamment des données du dispositif d'enregistrement de données (115, 120, 125) ; et
   un transmetteur sans fil (250) configuré pour transmettre les données sauvegardées lorsqu'un ou plusieurs critères prédéfinis dans les données sauvegardées et/ou les dispositifs d'enregistrement (115, 120, 125) sont remplis ;
   caractérisé en en ce que
   le critère prédéfini se rapporte à un paramètre d'accélération du véhicule volant hôte (105) analysé par un flux de données de vol conventionnel ARINC 717.

2. Dispositif selon la revendication 1, comprenant en outre un module d'éjection configuré pour séparer une ou plusieurs parties éjectables du dispositif du véhicule volant hôte lorsque les critères prédéfinis dans les données sauvegardées sont remplis.

3. Dispositif selon la revendication 1 ou 2, comprenant en outre un dispositif de flottaison gonflable configuré pour être activé dans l'eau.

4. Dispositif selon l'une quelconque des revendications 1 à 3, comprenant en outre un moyen à redressement automatique configuré pour ramener le dispositif à une configuration neutre dans l'eau en permettant au dispositif de prendre une orientation opérationnelle de manière à ce qu'il reste sensiblement dirigé vers le haut par rapport à la surface de l'eau.

5. Dispositif selon l'une quelconque des revendications 1 à 4, comprenant en outre un moyen déployable incluant un ou plusieurs parachutes et parapentes pour ralentir la descente du dispositif sur un site d'atterrissage.

6. Dispositif selon la revendication 5, dans lequel le moyen déployable inclut un ensemble à ailes et un système de propulsion incluant un ou plusieurs rotors disposés sur l'ensemble à ailes pour générer un levage.

7. Dispositif selon l'une quelconque des revendications 1 à 6, comprenant en outre un module de localisation configuré pour déterminer une localisation du dispositif.

8. Dispositif selon l'une quelconque des revendications 1 à 7, dans lequel le critère prédéfini survient avant l'occurrence d'un événement de défaillance catastrophique impliquant le véhicule volant hôte.

9. Dispositif selon l'une quelconque des revendications 1 à 8, comprenant en outre un récepteur sans fil configuré pour recevoir des données sans fil, y compris des données d'interrogation sans fil, le transmetteur sans fil étant en outre configuré pour transmettre les données sauvegardées à réception des données d'interrogation sans fil.

10. Dispositif selon l'une quelconque des revendications 1 à 9, comprenant en outre une alimentation électrique indépendante configurée pour fournir du courant au dispositif pendant une période étendue.

11. Dispositif selon l'une quelconque des revendications 1 à 10, dans lequel le module d'interface est configuré pour établir l'interface du dispositif avec les dispositifs d'enregistrement de données dans le véhicule volant hôte via une ou plusieurs connexions optiques, connexions filaires ou connexions sans fil.

12. Dispositif selon l'une quelconque des revendications 1 à 11, dans lequel le module d'interface est configuré pour établir l'interface du dispositif avec au moins un dispositif d'enregistrement d'images positionné à des emplacements différents autour du véhicule volant hôte pour enregistrer des données d'image.

13. Dispositif selon la revendication 12, dans lequel le module d'interface est configuré pour régler au moins un paramètre parmi la fréquence d'images, le nombre de pixels verticaux, le nombre de pixels horizontaux, la définition et le procédé de codage de données d'images du dispositif d'enregistrement d'images en se basant sur le critère prédéfini.

FIG. 1

FIG. 2

EP 3 768 599 B1

FIG. 3

FIG. 4

FIG. 5

START

Independently storing data from the recording devices — 610

Monitoring data for predefined criterion in the stored data and/or recording devices — 615

Wirelessly transmitting the stored data when one or more predefined criterion are met — 620

Ejecting one or more ejectable parts of the device from the host vehicle — 625

END

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9738398 B1
- WO 2016203322 A2
- US 2017251096 A1
- WO 2016141231 A1
- KR 101007214 B1